# EUROPEAN PATENT APPLICATION

(11) **EP 4 005 914 A1**
(43) Date of publication of application: **01.06.2022**
(21) Application number: 20848117.6
(22) Date of filing: 25.06.2020
(51) Int. Cl.: B62L 3/02, F16D 66/02, G05G 25/00, G05G 1/04, B60T 7/02, B60T 17/22, B60T 11/18, B60T 8/00, B60T 8/171, B60T 8/172

(54) **CONTROL DEVICE FOR HANDLEBAR VEHICLE**

(30) Priority: 31.07.2019 JP 2019140826
(71) Applicant: Hitachi Astemo, Ltd., Ibaraki 312-8503 (JP)
(72) Inventor: ATSUTA Daiki, Hitachinaka-shi, Ibaraki 312-8503 (JP)
(74) Representative: Dehns
(86) International application number: PCT/JP2020/024968
(87) International publication number: WO 2021/019979

(57) **Abstract**

A control device (1A) for a vehicle comprises an operation amount detection device (50), a hydraulic pressure control device (100), and an electronic control device (200A). The operation amount detection device (50) detects a turning amount of a brake lever (20A) via a rotation angle sensor (51). The electronic control device (200A) is provided with a hydraulic pressure calculation unit (220) that estimates brake hydraulic pressure generated from a master cylinder (60) on the basis of the turning amount of the brake lever (20A), and a control unit (230) that controls the hydraulic pressure control device (100) on the basis of the estimated value of brake hydraulic pressure. With this configuration, motive power generated by operation of the brake lever (20A) can be detected while the number of components in the vehicle with handlebar are reduced.

## Description

### Technical Field

The present disclosure relates to a control device for a vehicle with handlebar.

### Background Art

A hydraulic pressure brake device for a vehicle with handlebar includes: a hydraulic pressure control device for controlling a brake hydraulic pressure applied to a wheel cylinder of a wheel brake; and an electronic control device for controlling the hydraulic pressure control device on the basis of a brake hydraulic pressure generated from a master cylinder (for example, see PTL 1).

A mechanical brake device for a vehicle with handlebar includes a brake cable connected to a brake lever and a wheel brake, and the wheel brake functions by applying a tensile force to the brake cable by an operation of the brake lever (for example, see PTL 2).

### Citation list

### Patent Literature

PTL 1: JP-A-2013-023031
PTL 2: JP-A-2012-036959

### Summary of Invention

### Technical Problem

The hydraulic pressure brake device in the related art is provided with a hydraulic pressure sensor in a substrate of the hydraulic pressure control device, and detects a brake hydraulic pressure of a hydraulic pressure path communicating with the master cylinder by the hydraulic pressure sensor, thereby detecting the brake hydraulic pressure generated from the master cylinder.

In the mechanical brake device in the related art, as a method for detecting a tensile force applied to a brake cable, there is a method for providing a tension sensor at one end of a brake cable.

As described above, in the brake device in the related art, since a sensor is provided in the hydraulic pressure control device or the wheel brake, there is a problem that the number of components of the hydraulic pressure control device and the wheel brake increases.

An object of the disclosure is to provide a control device for a vehicle with handlebar that can solve the problem and detect motive power generated by operation of an operator while the number of components in the vehicle with handlebar is reduced.

### Solution to Problem

To solve the problem, a first aspect is a brake device for a vehicle with handlebar including: an operation amount detection device configured to detect a rotation amount of an operator; a master cylinder configured to generate a hydraulic pressure by rotating the operator; a control device; and an electronic control device. The operation amount detection device is provided with a rotation angle sensor fixed to a holder that rotatably supports the operator, and is configured to detect the rotation amount of the operator via the rotation angle sensor. The electronic control device is provided with a hydraulic pressure calculation unit that is configured to estimate a hydraulic pressure generated from the master cylinder on the basis of the rotation amount of the operator and a control unit that is configured to control the control device on the basis of an estimated value of the hydraulic pressure generated from the master cylinder.

In the control device for the vehicle with handlebar according to the first aspect, since the hydraulic pressure generated from the master cylinder can be detected without providing a hydraulic pressure sensor in the control device, the number of components of the vehicle with handlebar can be reduced.

In the control device for the vehicle with handlebar, the electronic control device may store hydraulic pressure data showing a corresponding relation between the rotation amount of the operator and the hydraulic pressure generated from the master cylinder. In this case, the hydraulic pressure calculation unit may estimate the hydraulic pressure generated from the master cylinder on the basis of the hydraulic pressure data.

In the control device for the vehicle with handlebar, when the operator is a brake operator configured to generate a brake hydraulic pressure in the master cylinder, and the control device is a hydraulic pressure control device configured to control a brake hydraulic pressure applied to a wheel cylinder of a wheel brake, the number of components of the hydraulic pressure control device can be reduced.

To solve the problem, a second aspect is a control device for a vehicle with handlebar including: an operation amount detection device configured to detect a rotation amount of an operator; a connection member connected to the operator; and an electronic control device. The operation amount detection device is provided with a rotation angle sensor fixed to a holder that rotatably supports the operator, and is configured to detect the rotation amount of the operator via the rotation angle sensor. The electronic control device is provided with a tensile force calculation unit that is configured to estimate a tensile force applied to the connection member on the basis of the rotation amount of the operator.

In the control device for the vehicle with handlebar according to the second aspect, since the tensile force applied to the connection member can be detected without providing a tension sensor in the connection member, the number of components of the vehicle with handlebar can be reduced.

In the control device for the vehicle with handlebar, the electronic control device may store tensile force data showing a relation between the rotation amount of the operator and the tensile force applied to the connection member. In this case, the tensile force calculation unit may estimate the tensile force applied to the connection member on the basis of the tensile force data.

In the control device for the vehicle with handlebar, when the operator is a brake operator and the connection member is a brake cable connected to a wheel brake, the number of components of the wheel brake can be reduced.

Generally, when starting a drive unit of the vehicle with handlebar, an ignition switch is turned on in a state where the wheel brake functions by rotating the brake operator. At this time, a driver locks wheels by rotating the brake operator until the brake operator is operated hard.

When the rotation amount of the brake operator is larger than a specified amount when the ignition switch is turned on, even if the rotation amount of the brake operator reaches the specified amount, the brake operator is not operated hard. In this case, a wear of a lining or a pad may be large or play of the brake operator may be large.

Furthermore, when the ignition switch is turned on, in the case that the rotation amount of the brake operator is less than the specified amount, the brake operator is operated hard before the rotation amount of the brake operator reaches the specified amount. In this case, even in a state where the brake operator is not operated, it is possible that the wheel brake functions and, for example, a braking force is always generated by the wheel brake.

In order to deal with such an event, it is preferable that the electronic control device is provided with a determination unit configured to determine an adjustment state of the wheel brake. Then, the determination unit determines the adjustment state of the wheel brake based on whether the rotation amount of the brake operator is within a set range when the ignition switch is turned on in a state where the brake operator is rotated from an initial position.

In the control device for the vehicle with handlebar, the electronic control device is provided with a brake lamp control unit configured to turn on a brake lamp on the basis of the rotation amount of the brake operator.

With this configuration, since it is not necessary to provide a switch device for turning on the brake lamp in the vicinity of the brake operator, a structure around the brake operator can be made simple. In addition, with the configuration, the brake lamp can be turned on with high accuracy on the basis of the rotation of the brake operator.

In the control device for the vehicle with handlebar, in the operation amount detection device, it is preferable to set a return position of the brake operator after the brake operator is rotated in a state of being assembled to the vehicle with handlebar as the initial position of the brake operator. With this configuration, the rotation amount of the brake operator can be accurately detected.

### Advantageous Effect

Since the control device for the vehicle with handlebar according to the disclosure can detect motive power generated by operation of the operator on the basis of the rotation amount of the brake operator, the number of components in the vehicle with handlebar can be reduced.

### Brief Description of Drawings

[FIG. 1] FIG. 1 is an overall configuration diagram showing a vehicle control device according to a first embodiment of the disclosure.
[FIG. 2] FIG. 2 is a plan view showing a brake lever and an operation amount detection device according to the first embodiment of the disclosure.
[FIG. 3] FIG. 3 is a front view showing the brake lever and the operation amount detection device according to the first embodiment of the disclosure.
[FIG. 4] FIG. 4 is a sectional view taken along a line IV-IV of FIG. 3 showing the operation amount detection device according to the first embodiment of the disclosure.
[FIG. 5] FIG. 5 is an exploded perspective view of a pivot, an annular member, and a detection shaft according to the first embodiment of the disclosure.
[FIG. 6] FIG. 6 is an overall configuration diagram showing a vehicle control device according to a second embodiment of the disclosure.
[FIG. 7] FIG. 7 is a plan view showing a brake lever and an operation amount detection device according to the second embodiment of the disclosure.
[FIG. 8] FIG. 8 is a front view of the brake lever and the operation amount detection device according to the second embodiment of the disclosure.
[FIG. 9] FIG. 9 is a sectional view taken along a line IX-IX of FIG. 8 showing the operation amount detection device according to the second embodiment of the disclosure.
[FIG. 10] FIG. 10 is an exploded perspective view showing a pivot, an annular member, and a detection shaft according to the second embodiment of the disclosure.

### Description of Embodiments

Embodiments of the disclosure will be described in detail with reference to drawings as appropriate.

In the description of each embodiment, the same constitution elements are designated by the same reference numerals, and duplicate description will be omitted.

### [First Embodiment]

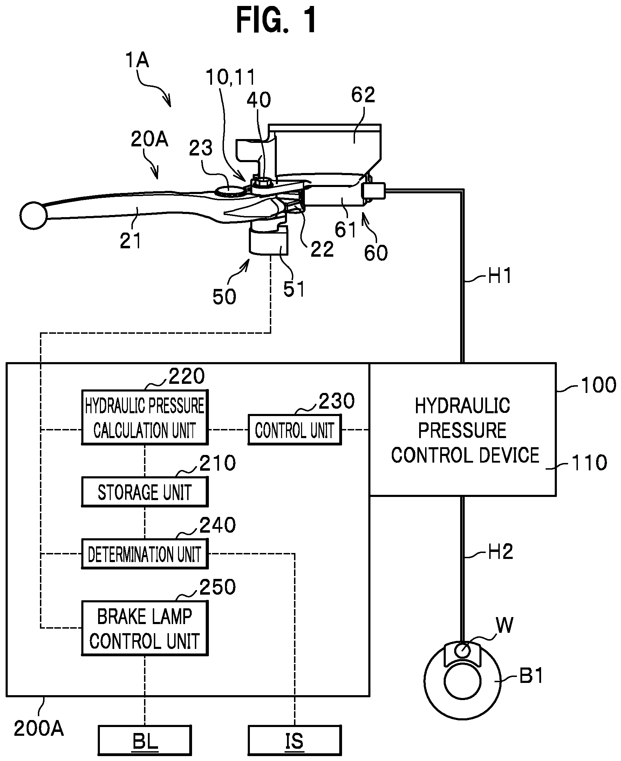

As shown in FIG. 1, a control device 1A for a vehicle with handlebar (hereinafter, simply referred to as a "vehicle control device") according to a first embodiment is used in a handlebar type vehicle such as a motorcycle, a three-wheeled motorcycle vehicle, or an all-terrain vehicle (ATV).

The vehicle control device 1A constitutes a hydraulic pressure brake system on a front wheel side or a rear wheel side of the vehicle with handlebar.

The vehicle control device 1A according to the first embodiment includes a holder 10, a brake lever 20A (referred to as an "operator" in claims), an operation amount detection device 50, a master cylinder 60, a hydraulic pressure control device 100, an electronic control device 200A, and a wheel brake B1.

The wheel brake B1 of the vehicle control device 1A is a hydraulic pressure disc brake in which a braking force is generated on wheels when pads sandwich a disc by a brake hydraulic pressure acting on a wheel cylinder W.

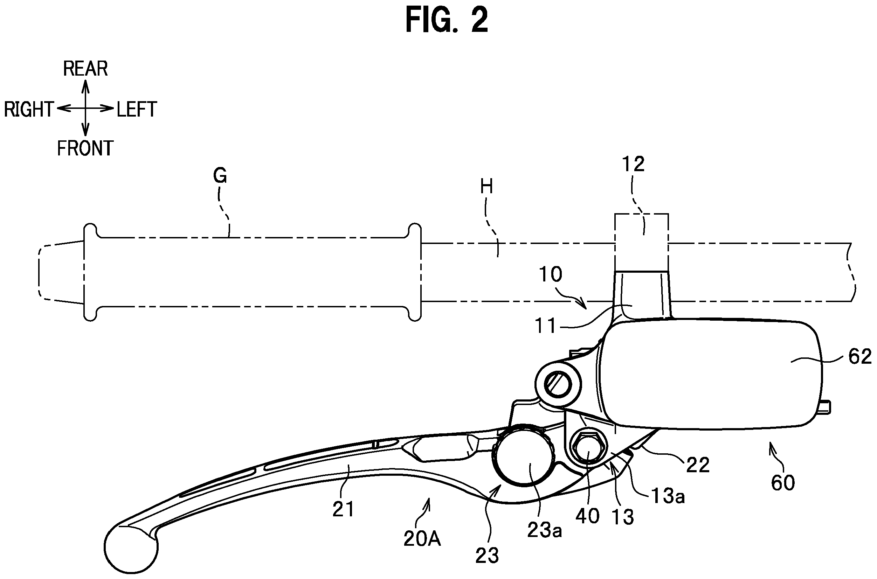

As shown in FIG. 2, the holder 10 is divided into a holder body 11 and a fixing member 12. Then, the holder body 11 is arranged on a front side of a handlebar H, the fixing member 12 is arranged on a rear side of the handlebar H, and the holder body 11 and the fixing member 12 are connected by bolts (not shown). Therefore, the holder 10 is fixed to the handlebar H by sandwiching the handlebar H between the holder body 11 and the fixing member 12.

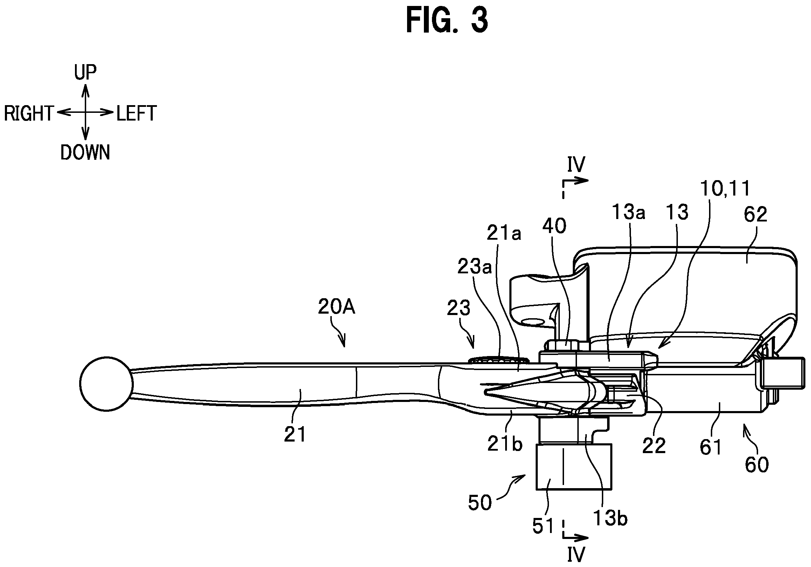

A lever connection portion 13 for connecting the brake lever 20A is formed on a front portion of the holder body 11. As shown in FIG. 3, the lever connection portion 13 is formed with an upper plate portion 13a and a lower plate portion 13b at an interval in an up-down direction.

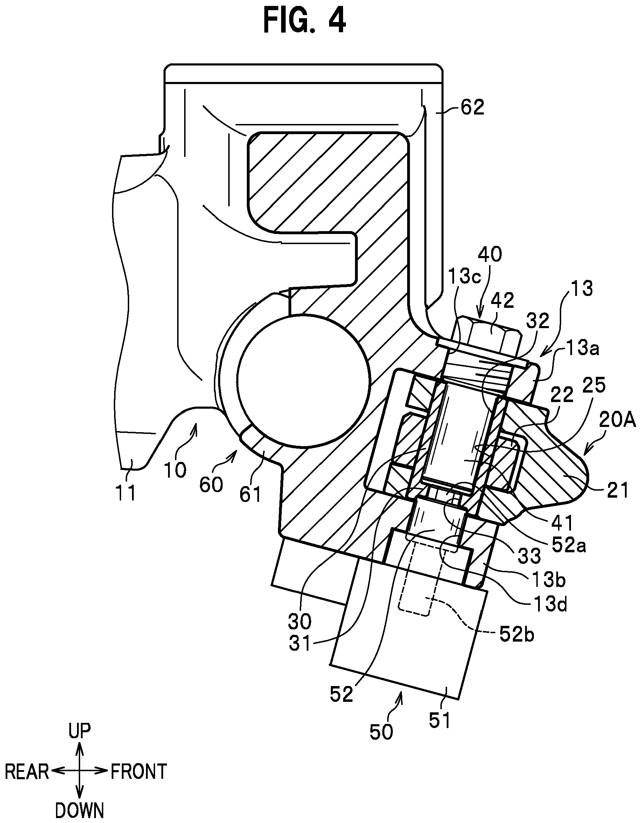

As shown in FIG. 4, a pivot fixing hole 13c penetrates the upper plate portion 13a in the up-down direction. The pivot fixing hole 13c is a screw hole into which a bolt portion 42 of a pivot 40 to be described later is screwed.

A shaft insertion hole 13d penetrates the lower plate portion 13b in the up-down direction. The shaft insertion hole 13d is a through hole through which a detection shaft 52 to be described later is inserted.

A center axis of the pivot fixing hole 13c and a center axis of the shaft insertion hole 13d are arranged coaxially.

As shown in FIG. 3, a cylinder 61 and a reservoir 62 of the master cylinder 60 are integrally formed on the holder body 11 according to the first embodiment.

The master cylinder 60 generates a brake hydraulic pressure corresponding to a force applied to the brake lever 20A by a driver.

A piston (not shown) is inserted in the cylinder 61. In addition, as shown in FIG. 1, the cylinder 61 is connected to the hydraulic pressure control device 100 via a pipe H1.

As shown in FIG. 2, the brake lever 20A includes a lever body 21, a knocker 22, and a grip margin adjustment mechanism 23.

The lever body 21 is a rod-shaped member arranged along the handlebar H, and is a portion operated by the driver with his/her finger.

As shown in FIG. 3, an upper portion 21a and a lower portion 21b are formed at a base portion of the lever body 21 at invertvals in the up-down direction.

The knocker 22 is a member connected to the base portion of the lever body 21 and connected to the master cylinder 60. A part of the knocker 22 is arranged between the upper portion 21a and the lower portion 21b of the lever body 21.

A projection portion (not shown) is formed on a side surface of the knocker 22. The projection portion is inserted into the cylinder 61 of the master cylinder 60 and is in contact with the piston (not shown) in the cylinder 61.

As shown in FIG. 4, a pivot insertion hole 25 having a circular shaft cross section penetrates the upper portion 21a and the lower portion 21b of the lever body 21, and the knocker 22 in the up-down direction. An annular member 30 is press-fitted into the pivot insertion hole 25.

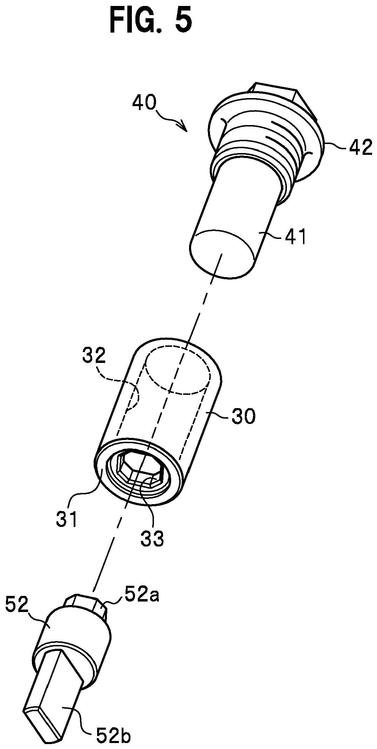

The annular member 30 is a bottomed cylindrical cylinder (see FIG. 5). The annular member 30 is press-fitted into the pivot insertion hole 25 in a state where a bottom portion 31 is arranged on a lower side. An outer peripheral surface of the annular member 30 and an inner peripheral surface of the pivot insertion hole 25 are pressure-welded such that the annular member 30 and the brake lever 20A (the lever body 21 and the knocker 22) co-rotate.

As shown in FIG. 5, the annular member 30 is formed with a bearing hole 32 having a circular shaft cross section. The bearing hole 32 is open on an upper end surface of the annular member 30. A fitting hole 33 having a polygonal shaft cross section penetrates a central portion of the bottom portion 31 of the annular member 30 in the up-down direction.

The pivot 40 is a shaft member inserted into the pivot insertion hole 25. The pivot 40 is formed with a support shaft portion 41 having a circular shaft cross section and the bolt portion 42 formed on a base end side of the support shaft portion 41.

As shown in FIG. 4, the pivot 40 is inserted into the pivot fixing hole 13c of the holder body 11 from above, and the bolt portion 42 is screwed into the pivot fixing hole 13c. Therefore, the pivot 40 is fixed to the holder body 11.

The support shaft portion 41 of the pivot 40 is inserted into the bearing hole 32 of the annular member 30. The annular member 30 is rotatably connected to the support shaft portion 41 about an axis.

Therefore, the support shaft portion 41 of the pivot 40 is inserted into the pivot insertion hole 25. Then, the annular member 30, the lever body 21, and the knocker 22 are rotatably connected to the support shaft portion 41 of the pivot 40 about the axis.

In the vehicle control device 1A according to the first embodiment, as shown in FIG. 2, the pivot 40 is fixed to the holder 10, and the lever body 21 and the knocker 22 of the brake lever 20A are freely rotatable about the axis of the pivot 40. Then, when the brake lever 20A is rotated from an initial position toward a handlebar H side, the piston (not shown) of the master cylinder 60 is pushed by the knocker 22, and the brake hydraulic pressure is generated in the master cylinder 60.

The brake lever 20A is provided with the grip margin adjustment mechanism 23. The grip margin adjustment mechanism 23 includes a dial 23a attached to the base portion of the lever body 21.

A pin (not shown) protrudes laterally from the dial 23a, and a tip portion of the pin is in contact with the side surface of the knocker 22. The grip margin adjustment mechanism 23 is configured to change an amount of protrusion of the pin when the dial 23a is rotated.

In the grip margin adjustment mechanism 23, a position of the lever body 21 with respect to the knocker 22 can be changed about the axis of the pivot 40 by rotating the dial 23a.

By adjusting an inclination angle of the lever body 21 with respect to the knocker 22 using the grip margin adjustment mechanism 23, it is possible to adjust a distance (grip margin) between the lever body 21 in an initial state of the brake lever 20A and a grip G of the handlebar H.

As shown in FIG. 4, the operation amount detection device 50 detects a rotation amount of the brake lever 20A. The operation amount detection device 50 includes a rotation angle sensor 51 fixed to the holder 10 and the detection shaft 52 fitted into a lower end portion of the pivot insertion hole 25.

The detection shaft 52 is inserted into the shaft insertion hole 13d of the holder body 11. The detection shaft 52 is freely rotatable about an axis with respect to the shaft insertion hole 13d. A rotation center axis of the pivot 40 and a rotation center axis of the detection shaft 52 are arranged coaxially.

A fitting portion 52a protrudes from a central portion of an upper end surface of the detection shaft 52. The fitting portion 52a has a polygonal shaft cross section and is fitted into the fitting hole 33 of the annular member 30.

Therefore, the detection shaft 52 is fitted into the pivot insertion hole 25 via the annular member 30. Then, the detection shaft 52, the annular member 30, the lever body 21, and the knocker 22 co-rotate about the axis of the pivot 40.

A detection portion 52b protrudes from a central portion of a lower end surface of the detection shaft 52. The detection portion 52b has a rectangular shaft cross section.

The rotation angle sensor 51 detects a rotation angle of the detection shaft 52. The rotation angle sensor 51 is fixed to a lower surface of the lower plate portion 13b of the holder body 11 by the bolts (not shown). The detection portion 52b of the detection shaft 52 is inserted in the rotation angle sensor 51.

The rotation amount of the brake lever 20A can be detected by detecting the rotation angle of the detection shaft 52 with the rotation angle sensor 51.

As shown in FIG. 1, the rotation angle sensor 51 is electrically connected to the electronic control device 200A to be described later. The rotation amount of the brake lever 20A detected by the rotation angle sensor 51 is output to the electronic control device 200A.

The initial position of the brake lever 20A is set in the operation amount detection device 50. The initial position of the brake lever 20A is a return position of the brake lever 20A after the brake lever 20A is operated and rotated a plurality of times in a state where the brake lever 20A is assembled to the handlebar H. Therefore, it is possible to accurately detect the rotation amount of the brake lever 20A by setting the initial position of the brake lever 20A in a state where components of the vehicle control device 1A are fitted to each other.

In the vehicle control device 1A as described above, as shown in FIG. 4, the rotation angle sensor 51 detects the rotation angle of the detection shaft 52 that rotates in conjunction with the brake lever 20A, so that an operation amount of the brake lever 20A can be accurately detected.

In the operation amount detection device 50 according to the first embodiment, since the detection shaft 52 is inserted into the pivot insertion hole 25 of the brake lever 20A, the detection shaft 52 and the rotation angle sensor 51 can be compactly arranged around the brake lever 20A. Therefore, the detection shaft 52 can be made simple, and thus the operation amount detection device 50 can be made lightweight.

In the operation amount detection device 50 according to the first embodiment, since the detection shaft 52 is arranged by virtue of the pivot insertion hole 25 for rotating the brake lever 20A, it is not necessary to machine a dedicated hole for attaching the detection shaft 52 into the brake lever 20A.

In the operation amount detection device 50 according to the first embodiment, the shaft cross section of the fitting hole 33 of the annular member 30 and the shaft cross section of the fitting portion 52a of the detection shaft 52 are formed in a polygonal shape (see FIG. 5). With this configuration, by fitting the fitting portion 52a into the fitting hole 33, the annular member 30 and the detection shaft 52 can be reliably connected and co-rotate.

In the operation amount detection device 50 according to the first embodiment, since the fitting hole 33 having the polygonal shaft cross section is machined in the annular member 30, and the annular member 30 is press-fitted into the pivot insertion hole 25, the pivot insertion hole 25 can be easily machined. Thus, a machining cost of the brake lever 20A can be reduced. In addition, since the lever body 21 and the knocker 22 are integrated by the annular member 30, an operation of assembling the brake lever 20A is facilitated.

Although a structure of the vehicle control device 1A according to the first embodiment of the disclosure has been described above, the disclosure is not limited to the first embodiment, and modifications may be appropriately made without departing from the scope of the disclosure.

In the vehicle control device 1A according to the first embodiment, as shown in FIG. 2, the brake lever 20A is provided with the grip margin adjustment mechanism 23, but the brake lever 20A may not be provided with the grip margin adjustment mechanism 23. In this case, since it is not necessary to divide the brake lever 20A into the lever body 21 and the knocker 22, the brake lever 20A is formed of an integral member.

In the operation amount detection device 50 according to the first embodiment, as shown in FIG. 4, the detection shaft 52 and the rotation angle sensor 51 are configured separately, but the rotation angle sensor 51 in which the detection shaft 52 is incorporated may be used.

In the operation amount detection device 50 according to the first embodiment, although the detection shaft 52 is fitted into the fitting hole 33 of the annular member 30, the detection shaft 52 may be fitted directly into the pivot insertion hole 25.

In the first embodiment, as shown in FIG. 2, although the operation amount detection device 50 applicable to the hydraulic pressure brake system having the brake lever 20A has been described, an operation amount detection device of the disclosure can also be applied to a hydraulic pressure brake system having a brake pedal.

In the operation amount detection device 50 according to the first embodiment, although the rotation amount of the brake lever 20A is detected, the operation amount detection device of the disclosure is applicable to various operators provided on the vehicle with handlebar. For example, when the operation amount detection device is configured to detect a rotation amount of a clutch lever, the rotation amount of the clutch lever can be detected under various conditions such as when the vehicle with handlebar is started, when the vehicle with handlebar is running, and when the vehicle with handlebar is stopped.

Next, a brake control in the vehicle control device 1A according to the first embodiment will be described.

As shown in FIG. 1, the vehicle control device 1A according to the first embodiment includes the hydraulic pressure control device 100 and the electronic control device 200A.

The hydraulic pressure control device 100 can perform an anti-lock brake control that suppresses wheel lock by increasing, decreasing, or holding the brake hydraulic pressure of the wheel brake B1. In addition, the hydraulic pressure control device 100 may also perform an interlocking brake control in which a braking force is generated in the wheel brake B1 in conjunction with other wheel brakes.

The hydraulic pressure control device 100 has a metal substrate 110, and a hydraulic pressure path is formed inside the substrate 110. The master cylinder 60 is connected to an inlet port of the substrate 110 via the pipe H1. In addition, the wheel cylinder W is connected to an outlet port of the substrate 110 via a pipe H2. In addition, a plurality of solenoid valves, an electric motor, and the electronic control device 200A are attached to the substrate 110.

The electronic control device 200A is a microcomputer including a central processing unit (CPU), a read-only memory (ROM), a random-access memory (RAM), and the like. The electronic control device 200A controls opening and closing of the solenoid valves and an operation of the electric motor of the hydraulic pressure control device 100, thereby executing the anti-lock brake control and the interlocking brake control.

The electronic control device 200A includes a storage unit 210, a hydraulic pressure calculation unit 220, a control unit 230, a determination unit 240, and a brake lamp control unit 250. A processing of each component in the electronic control device 200A is embodied by running a program stored in the storage unit 210 by the CPU.

The storage unit 210 stores hydraulic pressure data showing a corresponding relation between the rotation amount of the brake lever 20A and the brake hydraulic pressure generated from the master cylinder 60. In addition, the storage unit 210 stores a specified amount of the rotation amount of the brake lever 20A when an ignition switch IS is turned on.

The hydraulic pressure calculation unit 220 estimates the brake hydraulic pressure generated from the master cylinder 60 on the basis of the rotation amount of the brake lever 20A detected by the operation amount detection device 50.

When the rotation amount of the brake lever 20A is input from the operation amount detection device 50, the hydraulic pressure calculation unit 220 calculates an estimated value of the brake hydraulic pressure corresponding to the detected rotation amount on the basis of the hydraulic pressure data stored in the storage unit 210. Then, the hydraulic pressure calculation unit 220 outputs the estimated value of the brake hydraulic pressure to the control unit 230.

The control unit 230 controls the opening and closing of the solenoid valves and the operation of the electric motor of the hydraulic pressure control device 100 on the basis of the estimated value of the brake hydraulic pressure input from the hydraulic pressure calculation unit 220, thereby executing the anti-lock brake control and the interlocking brake control.

The determination unit 240 determines an adjustment state of the wheel brake B1 on the basis of the rotation amount of the brake lever 20A detected by the operation amount detection device 50 when the ignition switch IS is turned on.

The storage unit 210 stores the specified amount of the rotation amount of the brake lever 20A when the ignition switch IS is turned on. The specified amount is a rotation amount of the brake lever 20A in which the brake lever 20A is operated hard and the wheels are locked when the driver rotates the brake lever 20A in a state where the wheel brake B1 is normally adjusted.

In the present embodiment, the wheel brake B1 functions by rotating the brake lever 20A when a drive unit such as an engine or a motor of the vehicle with handlebar is started. At this time, the driver rotates the brake lever 20A until the brake lever 20A is operated hard to lock the wheels.

Then, when the ignition switch IS is turned on, in the case that the rotation amount of the brake lever 20A is greater than the specified amount, the brake lever 20A is not operated hard even in the case that the rotation amount of the brake lever 20A reaches the specified amount.

In this case, since a wear of the pad of the wheel brake B1 may be large or play of the brake lever 20A may be large, the determination unit 240 determines that the adjustment of the wheel brake B1 is necessary, and a determination result is displayed on a display unit such as a lamp or a monitor.

Furthermore, when the ignition switch IS is turned on, in the case that the rotation amount of the brake lever 20A is less than the specified amount, the brake lever 20A is operated hard before the rotation amount of the brake lever 20A reaches the specified amount.

In this case, even in a state where the brake lever 20A is not operated, since it is possible that the wheel brake B1 functions and, for example, the braking force is always generated by the wheel brake B1, the determination unit 240 determines that the adjustment of the wheel brake B1 is necessary, and the determination result is displayed on the display unit such as the lamp or the monitor.

The brake lamp control unit 250 turns on and off a brake lamp BL on the basis of the rotation amount of the brake lever 20A detected by the operation amount detection device 50.

When the brake lever 20A is gripped and the rotation amount of the brake lever 20A reaches a predetermined amount, the brake lamp control unit 250 turns on the brake lamp BL. In addition, when the brake lever 20A is returned and the rotation amount of the brake lever 20A is less than the predetermined amount, the brake lamp control unit 250 turns off the brake lamp BL.

In the vehicle control device 1A as described above, since the brake hydraulic pressure generated from the master cylinder 60 can be detected without providing a hydraulic pressure sensor in the hydraulic pressure control device 100, the number of components of the hydraulic pressure control device 100 can be reduced.

In addition, in the vehicle control device 1A, the adjustment state of the wheel brake B1 can be determined and the brake lamp BL can be turned on with high accuracy on the basis of the rotation amount of the brake lever 20A.

Although the control of the vehicle control device 1A according to the first embodiment of the disclosure has been described above, the disclosure is not limited to the first embodiment, and the modifications can be appropriately made without departing from the scope of the disclosure.

For example, in the electronic control device 200A, the adjustment state of the wheel brake B1 can also be determined on the basis of the rotation amount of the brake lever 20A and an acceleration of a vehicle body. With this configuration, when the decrease in the acceleration of the vehicle body detected by an acceleration sensor is large even though the rotation amount of the brake lever 20A is small, the wheel brake B1 may be functioning even when the brake lever 20A is not operated, and thus the determination unit 240 determines that the wheel brake B1 needs to be adjusted.

In addition, when the operation amount detection device of the vehicle control device of the disclosure detects the rotation amount of the clutch lever, the electronic control device can determine an adjustment state of a clutch on the basis of the rotation amount of the clutch lever.

### [Second Embodiment]

Next, a vehicle control device 1B according to a second embodiment will be described.

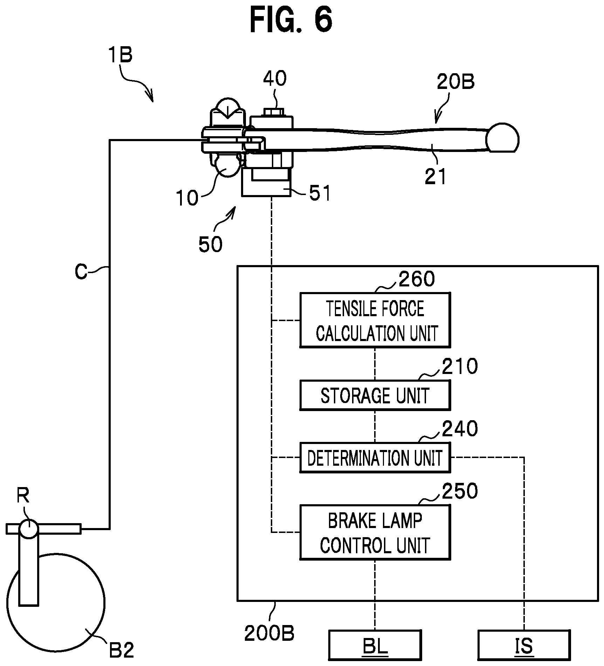

As shown in FIG. 6, the vehicle control device 1B according to the second embodiment constitutes a mechanical brake system on a front wheel side or a rear wheel side of the vehicle with handlebar.

The vehicle control device 1B according to the second embodiment includes the holder 10, a brake lever 20B (referred to as an "operator" in claims), the operation amount detection device 50, an electronic control device 200B, and a wheel brake B2.

The wheel brake B2 of the vehicle control device 1B is a mechanical drum brake. In the wheel brake B2, when a tensile force is applied to a brake cable C (referred to as a "connection member" in claims) by an operation of the brake lever 20B, a rod R is tilted and a brake shoe is pressed against an inner peripheral surface of a drum, so that a braking force is generated in wheels.

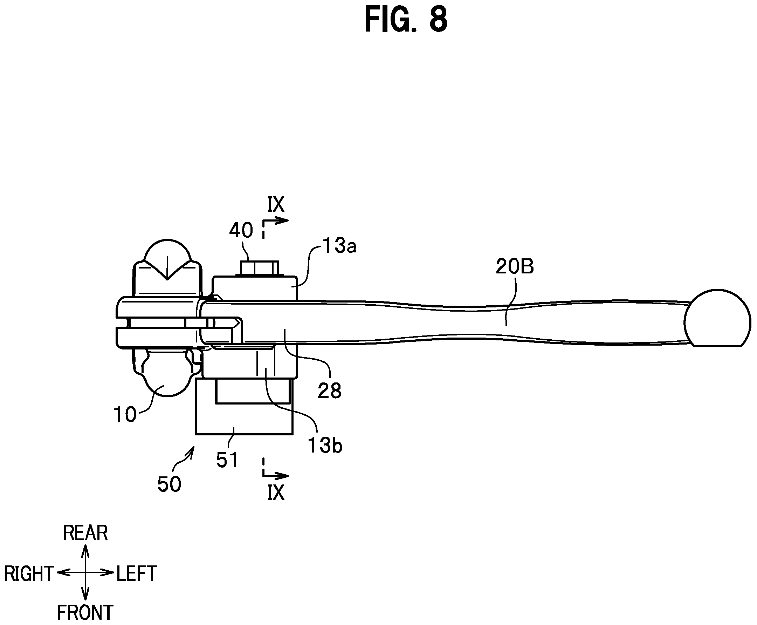

In the vehicle control device 1B according to the second embodiment, as shown in FIG. 8, a base portion 28 of the brake lever 20B is arranged between the upper plate portion 13a and the lower plate portion 13b of the lever connection portion 13 of the holder 10. As shown in FIG. 6, one end of the brake cable C is connected to the base portion 28 of the brake lever 20B.

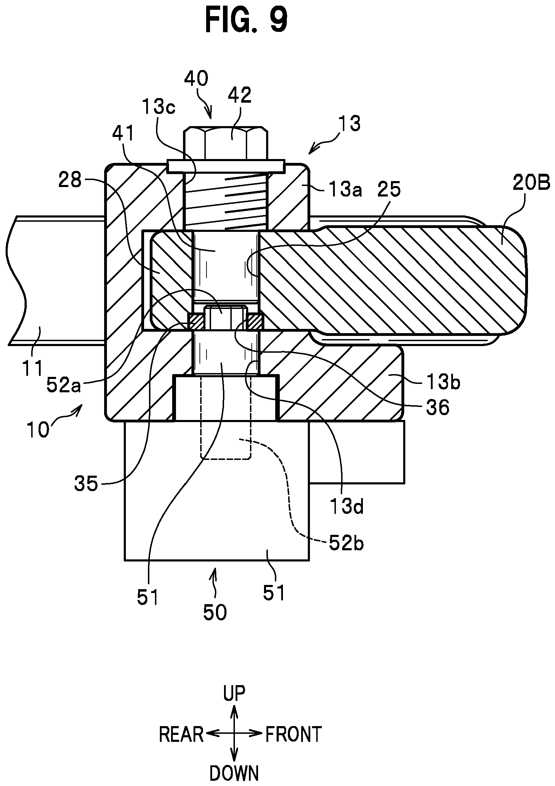

As shown in FIG. 9, the pivot insertion hole 25 penetrates the base portion 28 of the brake lever 20B in the up-down direction. An annular member 35 is inserted in a lower end portion of the pivot insertion hole 25.

The annular member 35 according to the second embodiment is an annular member. The annular member 35 is press-fitted into the lower end portion of the pivot insertion hole 25. An outer peripheral surface of the annular member 35 and an inner peripheral surface of the pivot insertion hole 25 are pressure-welded such that the annular member 35 and the brake lever 20B co-rotate.

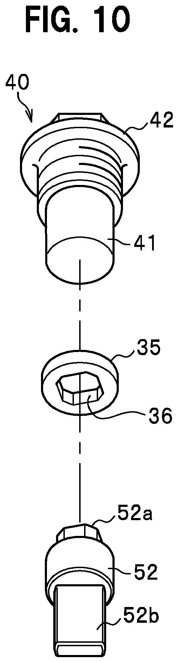

A fitting hole 36 having a polygonal shaft cross section penetrates a central portion of the annular member 35 according to the second embodiment (see FIG. 10).

In the pivot 40 according to the second embodiment, the support shaft portion 41 is inserted into the pivot insertion hole 25, and the bolt portion 42 is screwed into the pivot fixing hole 13c. Therefore, the base portion 28 of the brake lever 20B is rotatably connected to the support shaft portion 41 about an axis.

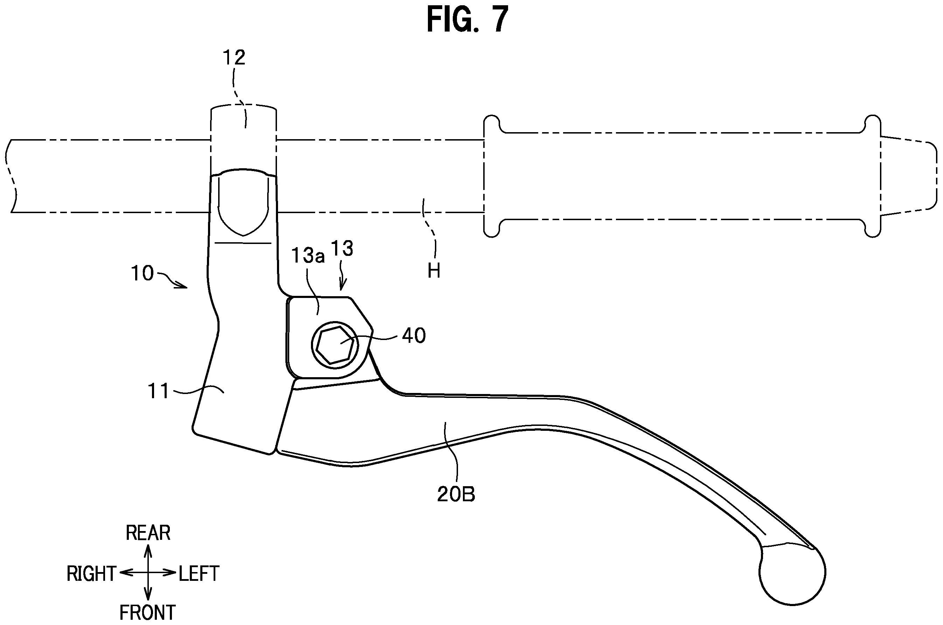

In the vehicle control device 1B according to the second embodiment, as shown in FIG. 7, the pivot 40 is fixed to the holder body 11, and the brake lever 20B is freely rotatable about an axis of the pivot 40. Then, when the brake lever 20B is rotated from an initial position toward a handlebar H side, the tensile force is applied to the brake cable C to operate the wheel brake B2.

In the operation amount detection device 50 according to the second embodiment, as shown in FIG. 9, the fitting portion 52a of the detection shaft 52 is fitted into the fitting hole 36 of the annular member 35. Then, in the operation amount detection device 50, the rotation angle sensor 51 can detect a rotation amount of the brake lever 20B by detecting a rotation angle of the detection shaft 52. The rotation amount of the brake lever 20B detected by the rotation angle sensor 51 is output to the electronic control device 200B.

Next, a brake control in the vehicle control device 1B according to the second embodiment will be described.

As shown in FIG. 6, the vehicle control device 1B according to the second embodiment includes the electronic control device 200B. The electronic control device 200B includes the storage unit 210, a tensile force calculation unit 260, the determination unit 240, and the brake lamp control unit 250.

The storage unit 210 according to the second embodiment stores tensile force data showing a relation between the rotation amount of the brake lever 20B and the tensile force applied to the brake cable C.

The tensile force calculation unit 260 estimates the tensile force applied to the brake cable C on the basis of the rotation amount of the brake lever 20B.

When the rotation amount of the brake lever 20B is input from the operation amount detection device 50, the tensile force calculation unit 260 calculates an estimated value of the tensile force corresponding to the detected rotation amount on the basis of the tensile force data stored in the storage unit 210.

The estimated value of the tensile force calculated by the tensile force calculation unit 260 is input to, for example, a control unit of a hydraulic pressure control device provided in a hydraulic pressure brake system of another wheel, and an interlocking brake control is executed on the basis of the estimated value of the tensile force.

In the vehicle control device 1B as described above, since the tensile force applied to the brake cable C can be detected without providing a tension sensor on the brake cable C, the number of components of the wheel brake B2 can be reduced.

In addition, in the vehicle control device 1B, the determination unit 240 can determine an adjustment state of the wheel brake B2 on the basis of the rotation amount of the brake lever 20B, and the brake lamp control unit 250 can turn on the brake lamp BL with high accuracy.

As described above, the disclosure is also applicable to the mechanical brake system, and the brake device 1B according to the second embodiment has the same function and effect as those of the vehicle control device 1A (see FIG. 1) according to the first embodiment.

Similar to the first embodiment, in the vehicle control device 1B according to the second embodiment of the disclosure, modifications can be appropriately made without departing from the scope of the disclosure.

For example, in the vehicle control device 1B according to the second embodiment as well, similarly to the vehicle control device 1A (see FIG. 2) according to the first embodiment, the brake lever 20B may be configured by the lever body and the knocker, and the grip margin adjustment mechanism may be provided.

In addition, in the vehicle control device according to the second embodiment as well, an operation amount detection device may detect a rotation amount of a clutch lever, and an electronic control device may determine an adjustment state of a clutch on the basis of the rotation amount of the clutch lever.

### Reference Sign List

- 1A: vehicle control device (first embodiment)
- 1B: vehicle control device (second embodiment)
- 10: holder
- 11: holder body
- 13: lever connection portion
- 13c: pivot fixing hole
- 13d: shaft insertion hole
- 20A: brake lever (first embodiment)
- 20B: brake lever (second embodiment)
- 21: lever body
- 22: knocker
- 23: grip margin adjustment mechanism
- 23a: dial
- 25: pivot insertion hole
- 30: annular member (first embodiment)
- 31: bottom portion
- 32: bearing hole
- 33: fitting hole
- 35: annular member (second embodiment)
- 36: fitting hole
- 40: pivot
- 41: support shaft portion
- 42: bolt portion
- 50: operation amount detection device
- 51: rotation angle sensor
- 52: detection shaft
- 52a: fitting portion
- 52b: detection portion
- 60: master cylinder
- 61: cylinder
- 62: reservoir
- 100: hydraulic pressure control device
- 110: substrate
- 200A: electronic control device (first embodiment)
- 200B: electronic control device (second embodiment)
- 210: storage unit
- 220: hydraulic pressure calculation unit
- 230: control unit
- 240: determination unit
- 250: brake lamp control unit
- 260: tensile force calculation unit
- B1: wheel brake (first embodiment)
- B2: wheel brake (second embodiment)
- BL: brake lamp
- C: brake cable
- H: handlebar
- IS: ignition switch
- W: wheel cylinder

## Claims

1. A control device for a vehicle with handlebar, comprising:
an operation amount detection device configured to detect a rotation amount of an operator;
a master cylinder configured to generate a hydraulic pressure by rotating the operator;
a control device; and
an electronic control device, wherein
the operation amount detection device is provided with a rotation angle sensor fixed to a holder that rotatably supports the operator, and is configured to detect the rotation amount of the operator via the rotation angle sensor, and
the electronic control device is provided with a hydraulic pressure calculation unit that is configured to estimate a hydraulic pressure generated from the master cylinder on the basis of the rotation amount of the operator, and a control unit that is configured to control the control device on the basis of an estimated value of the hydraulic pressure generated from the master cylinder.

2. The control device for the vehicle with handlebar according to claim 1, wherein
the electronic control device stores hydraulic pressure data showing a corresponding relation between the rotation amount of the operator and the hydraulic pressure generated from the master cylinder, and
the hydraulic pressure calculation unit estimates the hydraulic pressure generated from the master cylinder on the basis of the hydraulic pressure data.

3. The control device for the vehicle with handlebar according to claim 1 or 2, wherein
the operator is a brake operator configured to generate a brake hydraulic pressure in the master cylinder, and
the control device is a hydraulic pressure control device configured to control a brake hydraulic pressure applied to a wheel cylinder of a wheel brake.

4. A control device for a vehicle with handlebar, comprising:
an operation amount detection device configured to detect a rotation amount of an operator;
a connection member connected to the operator; and
an electronic control device, wherein
the operation amount detection device is provided with a rotation angle sensor fixed to a holder that rotatably supports the operator, and is configured to detect the rotation amount of the operator via the rotation angle sensor, and
the electronic control device is provided with a tensile force calculation unit that is configured to estimate a tensile force applied to the connection member on the basis of the rotation amount of the operator.

5. The control device for the vehicle with handlebar according to claim 4, wherein
the electronic control device stores tensile force data showing a relation between the rotation amount of the operator and the tensile force applied to the connection member, and
the tensile force calculation unit estimates the tensile force applied to the connection member on the basis of the tensile force data.

6. The control device for the vehicle with handlebar according to claim 4 or 5, wherein
the operator is a brake operator, and
the connection member is a brake cable connected to a wheel brake.

7. The control device for the vehicle with handlebar according to claim 3 or 6, wherein
the electronic control device is provided with a determination unit configured to determine an adjustment state of the wheel brake, and
the determination unit determines the adjustment state of the wheel brake based on whether the rotation amount of the brake operator is within a specified amount when an ignition switch is turned on in a state where the brake operator is rotated from an initial position.

8. The control device for the vehicle with handlebar according to any one of claims 3, 6, and 7, wherein
the electronic control device is provided with a brake lamp control unit configured to turn on a brake lamp on the basis of the rotation amount of the brake operator.

9. The control device for the vehicle with handlebar according to any one of claims 3 and 6 to 8, wherein
in the operation amount detection device, a return position of the brake operator after the brake operator is rotated in a state of being assembled to the vehicle with handlebar is set as the initial position of the brake operator.
